# EUROPEAN PATENT APPLICATION

(11) **EP 2 058 472 A1**
(43) Date of publication of application: **13.05.2009**
(21) Application number: 07806584.4
(22) Date of filing: 28.08.2007
(51) Int. Cl.: F01B 9/08, F01B 29/08, F03G 7/00

(54) **DRIVE DEVICE USING CHARGED AIR PRESSURE**

(30) Priority: 31.08.2006 JP 2006234878; 16.11.2006 JP 2006310335
(71) Applicant: Murakami, Eizaburu, Tokyo 136-0071 (JP); Murakami, Noboru, Tokyo 136-0071 (JP); Murakami, Satoshi, Tokyo 136-0071 (JP)
(72) Inventor: Murakami, Eizaburu, Tokyo 136-0071 (JP); Murakami, Noboru, Tokyo 136-0071 (JP); Murakami, Satoshi, Tokyo 136-0071 (JP)
(74) Representative: Bailey, Richard Alan
(86) International application number: PCT/JP2007/067111
(87) International publication number: WO 2008/026758

(57) **Abstract**

In a drive device, two cylinders filled with air pressure are interconnected, and the pistons of the cylinders are pressed under the same pressure by compressed air supplied to the cylinders. The drive device has an external input device for applying an external input to the cylinders so that the pistons reciprocate alternately. The external input device causes the pistons to reciprocate alternately, and the reciprocation motion provides rotational force. The interconnected cylinders are multistage cylinders, pressurized air flow paths (22A, 22B) connected to each cylinder stage are formed in the multistage cylinders, and (17A, 17B) for opening and closing the flow paths are also provided in the cylinders.

## Description

### TECHNICAL FIELD

The present invention relates to a drive device using a filled air pressure as the one that can be driven without using a drop of gasoline fuel or the like for prevention of environmental pollution, the drive device that can extract doubled output that is proportional to fill pressure to the outside by compressing and filling air serving as natural energy, is effective in saving energy and maintaining environmental health, and is in particular suitable for use as a drive source of a pollution-free drive device in various drive devices including travel devices, such as bicycles and automobiles, and generators.

### BACKGROUND ART

The applicant previously filed a pressure-mechanical converting device, which converts air pressure into mechanical power by the patent document mentioned below, and obtained a patent right.
(Patent Document 1) Japanese Patent No. 2127336

This uses compressed gas at a specified pressure as a drive source, and uses a set of operative mechanisms built with two cylinder chambers placed side by side, the cylinder chambers being communicated with each other via a communicating hole, and two piston rods. It pressurizes pistons of the cylinders under the same pressure by feeding compressed air to each cylinder, applies a force on both ends of an actuated base with piston rods of the pistons, the actuated base being supported on a bearing of the actuated base in such a way as to turn in a reciprocating manner in lever style, moves the set of cylinders from side to side, changes the fulcrum points of the piston rods alternately with respect to an input shaft of a switching gear while maintaining the same distance, and at the same time turns a lever rod in a reciprocating manner by using leverage, thereby converting air pressure into mechanical power.

The pressure-mechanical converting device of Patent Document 1 makes it unnecessary to exhaust compressed air with which each cylinder is filled at each stroke of the piston. As a result, it is possible to obtain a strong output, that is, workload, simply by making up for leakage of air, economize on fuel greatly compared with a conventional drive device, which consumes fuel on operating, and use it as a power source most suitable for maintaining environmental health.

However, Patent Document 1 described above drives the switching gear rotated by a small external force so as to rotate in a reciprocating manner, alternately repeating left rotation and right rotation, to move first and second rack members in parallel in opposite directions, one leftward, the other rightward, and is unfit for rotation in a particular direction, for example, input by stepping on a pedal of a bicycle or the like, input with a battery-driven small motor, or input by rotating a crank by hand in one direction.

Therefore, by developing the principles of Patent Document 1 described above, obtained was Patent Document 2 described below, in which a cylinder bearing is provided in a cylinder device, right-left movement means of the cylinder device, which is driven by the rotation of an input receiving shaft, is engaged with the cylinder bearing, and the end of a piston rod of each piston is engaged with an actuated base supported in such a way as to turn in a reciprocating manner in lever style, whereby, when air pressure is converted into mechanical power by using leverage of the actuated base, switching of the spot where a force is applied and the point of application with respect to the fulcrum points of a piston A and a piston B inserted into the cylinders filled with compressed air can be performed more smoothly.
(Patent Document 2) Japanese Patent No. 2727166

Furthermore, Patent Document 3 described below makes it possible, by making further improvements to a cylinder pressure-based mechanical device of Patent Document 2 described above, to obtain output with little loss by transmitting force more smoothly by ingeniously combining the bearings and the gears.
(Patent Document 3) Japanese Patent No. 3776382

In Patent Document 3, by using a special mechanism built with the most stable gear train, a bifurcated bearing transfer piece clamped to each piston rod moves up and down, such that a bearing transfer groove provided therein can always move in parallel.

What the pressure-mechanical converting devices of Patent Documents 1 to 3 have in common is that they use a set of cylinders which is moved from side to side and is built with two cylinder chambers communicated with each other and placed side by side; they pressurize the pistons of the cylinders under the same pressure with compressed air fed to each cylinder, alternately apply the movements of the piston rods of the pistons to both ends of an actuated base supported in such a way as to turn in a reciprocating manner in lever style with a fulcrum point at the same distance, and turn a lever rod in a reciprocating manner by using leverage, thereby converting air pressure into mechanical power.

That is, Patent Documents 1 to 3 were obtained by ingeniously designing a force transmission mechanism in order to obtain output by converting the alternate up-and-down movements of the right and left pistons into a rotational movement by filling air pressure and with no exhaust stroke.

### DISCLOSURE OF INVENTION

### PROBLEM TO BE SOLVED BY THE INVENTION

The cylinder pressured-based mechanical device of Patent Document 1 described above, the pressure-mechanical converting device of Patent Document 2, and the cylinder pressured-based mechanical device of Patent Document 3 use a cylinder, which accumulates air in its chamber with no exhaust stroke. However, although pressure air is trapped, a mechanical force is used to move the pressure of this fill pressure air between the cylinders, and the securing of energy therefor has limited sustainability because it is not a perpetual motion machine.

Moreover, as for the sustainability, it is impossible to completely prevent the fill pressure air from leaking from the cylinder, and therefore it is necessary to replenish the cylinder chamber with air pressure to fill it therewith. This makes it extremely difficult to obtain a stroke for a long time with no exhaust stroke at the time of alternate up-and-down movements of the right and left pistons.

An object of the present invention is to provide a drive device using filled air, the drive device that can obtain strong and smooth torque proportional to fill pressure as a result of filled air pressure moving alternately between multistage piston chambers by means of energy-saving control, opening and closing of a valve.

### MEANS FOR SOLVING PROBLEM

To achieve the above object, the main point of the invention recited in claim 1 is that, in a drive device using charged air pressure in which two air pressure filled cylinders are communicated with each other, pistons of the cylinders are pressurized under the same pressure by compressed air fed to each cylinder, and the pistons of the cylinders are made to reciprocate alternately by providing an external input device feeding an external input so as to make piston rods of the pistons reciprocate alternately, the drive device obtaining torque by this reciprocating movement, the air pressure filled cylinders communicated with each other are first-stage cylinders, to which small diameter cylinders including a second-stage cylinder are connected to form multistage cylinders, multistage pistons in the stage cylinders including the second-stage cylinder are formed integrally with the pistons of the first-stage cylinders, the multistage pistons have formed therein filled air pressure fluid circulation paths communicated with the stage cylinders of the multistage cylinders and are provided with valves opening and closing the filled air pressure fluid circulation paths, when the pistons are pushed downward by the external input, the valves are closed so as to make thrust sufficiently act on the pistons, pushing first-stage pistons of the first-stage cylinders downward and obtaining multistage thrust by using the thrust as an acting force of a second-stage piston and a third-stage piston.

According to the invention recited in claim 1, by driving the cylinders alternately by transferring and supplying filled air pressure to the cylinders provided in two lines, one on the left and the other on the right, alternately, it is possible to obtain the alternate reciprocating movements of the cylinders as continued output without using a drop of gasoline fuel or the like only by compressing and filling air serving as natural energy. Furthermore, the cylinders are formed as multistage cylinders each housing a multistage piston, making it possible to obtain thrust several times higher than theoretical thrust, which is an output at an air pressure.

Moreover, control of the alternate transfer of filled air pressure to the cylinders is performed by forming the filled air pressure fluid circulation paths communicated with the stage cylinders of the multistage cylinders and providing the valves which open and close them, and therefore requires only an extremely small amount of energy.

The main point of the invention recited in claim 2 is that piston hanger rods provided on the left and right sides of a piston hanger swing lever are locked by the multistage pistons, valve pressing rods for opening and closing the valves which open and close the filled air pressure fluid circulation paths of the multistage pistons, the filled air pressure fluid circulation paths being communicated with the stage cylinders, are inserted into the piston hanger rods in such a way that the valve pressing rods can move up and down, and the valves of the left and right multistage cylinders are opened and closed alternately by pushing and pulling the valve pressing rods with valve switching swing levers which are made to swing by a drive motor.

According to the invention recited in claim 2, as compared with the above working, since the opening and closing of the valves is performed by pushing and pulling the valve pressing rods with valve switching swing levers which are made to swing by a drive motor, it is possible to ensure mechanically reliable operation.

The main point of the invention recited in claim 3 is that valve switching swing levers are made to swing by a drive motor by rotating left and right valve switching gears with an intermediate gear rotated by the drive motor, and making bearings provided in the valve switching gears reciprocate in left and right long grooves of the valve switching swing levers.

According to the invention recited in claim 3, to make the valve switching swing levers swing, it is possible to transmit the rotation of the drive motor as an up-and-down movement by the gear.

The main point of the invention recited in claim 4 is that multistage piston chambers are filled with air pressure from a pressure vessel and, at the same time, each piston hangs from each piston hanger swing lever through a piston hanger rod and keeps balance.

According to the invention recited in claim 4, as an initial motion, a stable state in an initial stage of the filling of air pressure is secured. When the multistage pistons are filled with air pressure from the pressure vessel, each piston hangs and keeps balance. When the opening and closing of the valves of the right and left piston chambers is performed instantaneously from this state, the multistage piston with the closed valve operates, contributing to torque obtained by increasing and decreasing the pressure of a final-stage piston.

The main point of the invention recited in claim 5 is that a compression pressure receiving/driving cylinder which slides while being fitted in a final-stage cylinder is provided as a transmission mechanism contributing to torque obtained by increasing and decreasing the piston pressure of the final-stage cylinder.

According to the invention recited in claim 5, the increasing and decreasing of the piston pressure of the final-stage cylinder can be received as it is by the compression pressure receiving/driving cylinder which slides while being fitted in the final-stage cylinder and directly transmitted, greatly increasing efficiency.

The main point of the invention recited in claim 6 is that a compression pressure receiving/driving cylinder is provided with an atmospheric pressure air discharge pump piston which automatically makes up for leakage of fill pressure, and a supply mechanism which allows the first-stage cylinders to be replenished with pressure air via a pressure vessel and a pipe is provided.

According to the invention recited in claim 6, as a result of the supply mechanism that can replenish pressure air with the output of the device of the invention being provided, when leakage or the like occurs as a natural phenomenon, it can be appropriately replenished.

The main point of the invention recited in claim 7 is that the driving of a compression pressure receiving/driving cylinder is transmitted to the rotation of a gear by a link mechanism and is used to operate a generator.

According to the invention recited in claim 7, it is possible to obtain electric power by operating a generator such as a dynamo speed increasing rotating battery charging generator with the output obtained by low electric power and filled air pressure.

The main point of the invention recited in claim 8 is that a pair of pressure concentration cylinders is provided as output cylinders for a pair of air-filled multistage cylinders including pistons provided with intake and exhaust valves which are opened and closed with an up-and-down movement, the pair of pressure concentration cylinders being filled with air from the pair of air-filled multistage cylinders and returning the fill air to the air-filled cylinders, and air supplied from the pair of air-filled multistage cylinders is made to flow together and is sent into the pressure concentration cylinders.

According to the invention recited in claim 8, the pressure air with which the air-filled cylinders are filled is sent into the pressure concentration cylinders, and output is produced by the pressure concentration cylinders. In doing so, the air-filled cylinders send pressure air into the pressure concentration cylinders while doubling the pressure thereof by the multistage pistons, making it possible to provide the pressure concentration cylinders with high energy and thereby obtain strong output.

In addition, by the action of the valves which are opened and closed with the up and down of the pistons, supply and exhaust of air to and from the pressure concentration cylinders can be performed. Furthermore, by making the pair of air-filled cylinders perform relative movements and making the pair of pressure concentration cylinders perform relative movements, it is possible to obtain continued movements.

The main point of the invention recited in claim 9 is that piston rods of a pair of air-filled cylinders are coupled to an input section such as a motor so as to perform relative movements with each other through the mediation of a gear mechanism producing a boosted force proportional to the main wheel diameter and the diameter of a pinion.

According to the invention recited in claim 9, the piston rods of the air-filled cylinders, by moving them up and down, perform up-and-down movements of the pistons and the opening and closing of the intake and exhaust valves associated with these movements, and, since they are coupled to an input section such as a motor through the mediation of a gear mechanism producing a boosted force proportional to the main wheel diameter and the diameter of a pinion, it is possible to reliably move the piston rods up and down without using much force.

The main point of the invention recited in claim 10 is that a gear mechanism producing a boosted force proportional to the main wheel diameter and the diameter of a pinion is constructed by fastening a pinion and a connecting lever to a piston rod to a radial gear having half the diameter of an internal gear fastened to a frame and making the radial gear mesh with the internal gear, fixing a main wheel to a pinion which meshes with the pinion, making an intermediate gear mesh with the main wheel, and making a pinion of a motor mesh with the intermediate gear.

According to the invention recited in claim 10, as one of the gear mechanisms producing a boosted force proportional to the main wheel diameter and the diameter of a pinion, a linear motion mechanism based on a Cardan circle is used, and, by setting the diameter of the pinion which meshes with the internal gear to half of that of the internal gear and choosing a pin of a crank (a connecting lever to a piston rod) fixed to the gear on the circumference of the pinion, when the pinion rotates while internally touching the internal gear, the pin linearly moves diametrically. This is effective, for example, when there is no space for a connecting rod in a slider crank mechanism.

The main point of the invention recited in claim 11 is that pressure concentration cylinders are rack-equipped piston cylinders and are placed with the racks thereof meshed with output gears.

According to the invention recited in claim 11, it is possible to use the rack to extract the output of the pressure concentration cylinder. In addition, since there is a pair of pressure concentration cylinders and therefore there is a pair of racks, by operating the pair of pressure concentration cylinders alternately, it is possible to provide the output gears, which mesh with the racks with continued output.

The main point of the invention recited in claim 12 is that piston rods of a pair of air-filled cylinders are extended and double as piston rods of an air supply piston, and atmospheric pressure air is accumulated in a pressure vessel by means of the air supply piston.

According to the invention recited in claim 12, it is possible to use the device of the invention to accumulate atmospheric pressure air in the pressure vessel.

### BRIEF DESCRIPTION OF DRAWINGS

FIG. 1 is an explanatory diagram of a first process in an embodiment of a drive device using filled air according to the invention.
FIG. 2 is an explanatory diagram of a second process in an embodiment of a drive device using filled air according to the invention.
FIG. 3 is an explanatory diagram of a third process in an embodiment of a drive device using filled air according to the invention.
FIG. 4 is a plan view of a principal portion in an embodiment of a drive device using filled air according to the invention.

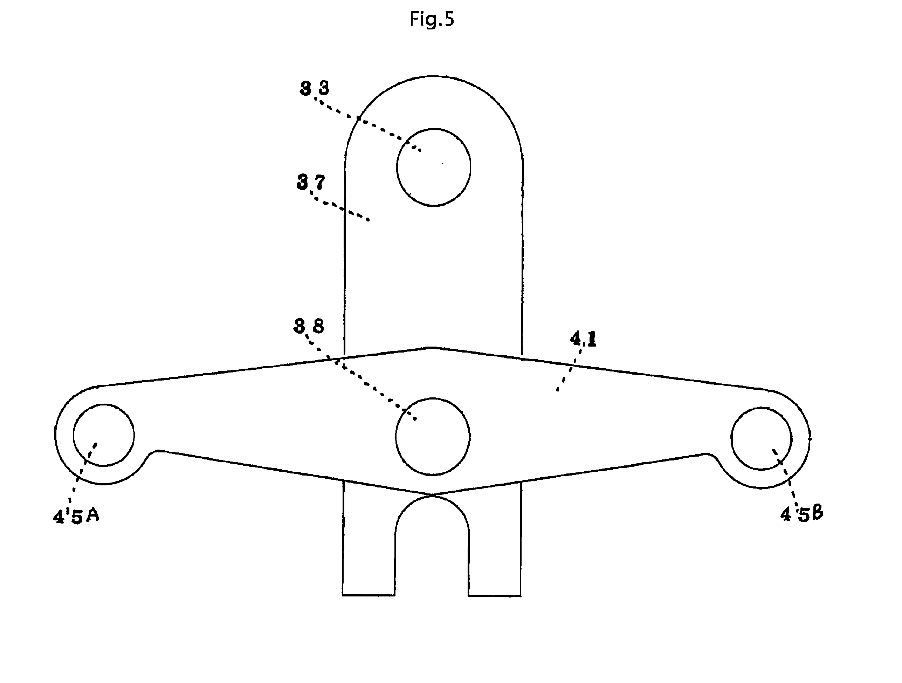

FIG. 5 is a side view of each piston hanger swing lever and a piston hanger plate.

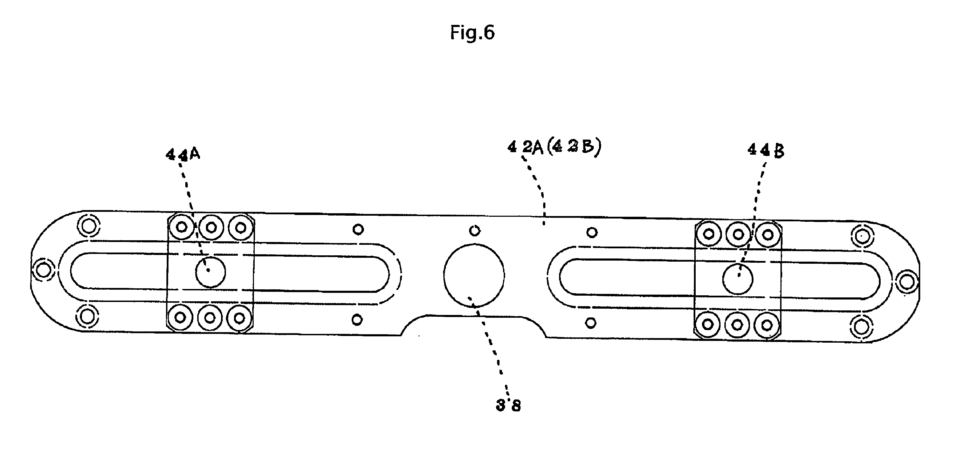

FIG. 6 is a side view of a valve switching swing lever.

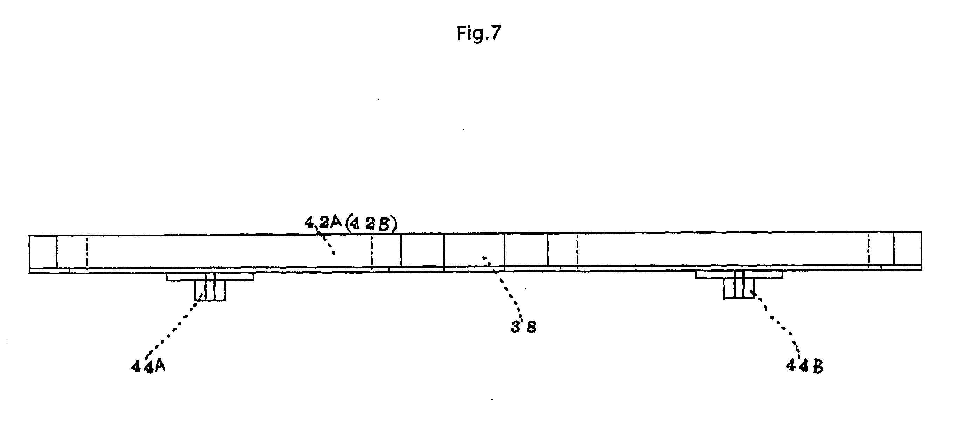

FIG. 7 is a plan view of the valve switching swing lever.
FIG. 8 is a longitudinal sectional side view of a first process in a second embodiment of a drive device using the circulation of filled air according to the invention.
FIG. 9 is a longitudinal sectional side view of a principal portion of the second embodiment of the drive device using the circulation of filled air according to the invention.
FIG. 10 is an explanatory diagram showing a state in which the valves are opened and closed in the first process in the second embodiment of the drive device using the circulation of filled air according to the invention.
FIG. 11 is an explanatory diagram showing a state in which the valves are opened and closed in a second process in the second embodiment of the drive device using the circulation of filled air according to the invention.
FIG. 12 is a longitudinal sectional side view of the second process in the second embodiment of the drive device using the circulation of filled air according to the invention.
FIG. 13 is an explanatory diagram of an output-shaft rotating shaft part in the second embodiment of the drive device using the circulation of filled air according to the invention.

### BEST MODE FOR CARRYING OUT THE INVENTION

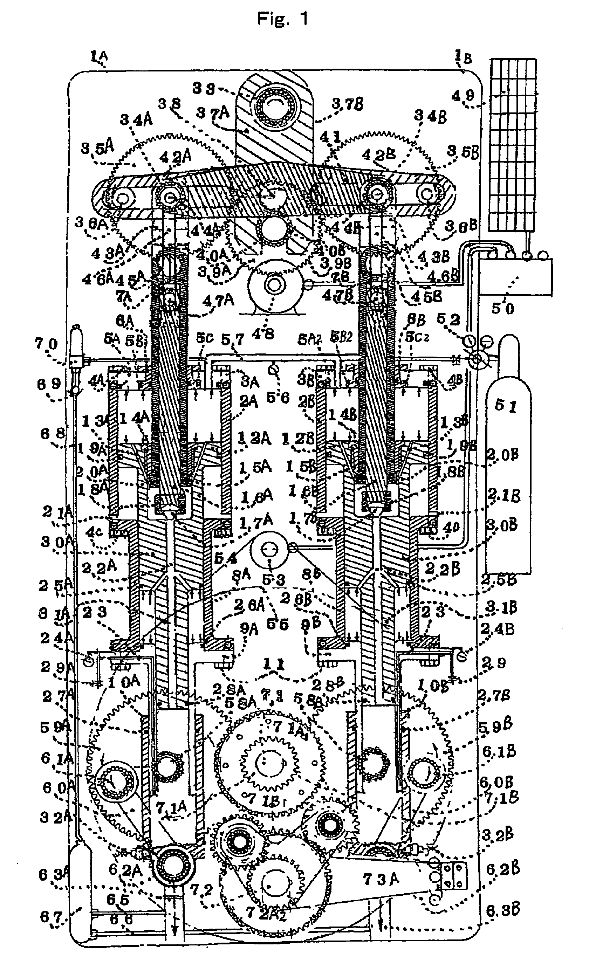

Hereinafter, embodiments of the present invention will be explained in detail with reference to the drawings. FIG. 1 is an explanatory diagram showing a first embodiment of a drive device using filled air according to the invention. In this figure, 1A and 1B denote frames for fixing a cylinder.

The drive device using filled air according to the invention is basically a drive device using charged air pressure, the drive device including a cylinder device in which two air pressure filled cylinders are communicated with each other, pistons of the cylinders are pressurized under the same pressure by compressed air fed to each cylinder, and piston rods of the pistons are made to reciprocate alternately by an external input device, an external input device feeding an external input to it, and a rotation output extracting mechanism that makes the pistons of the cylinders reciprocate alternately and obtains torque by this reciprocating movement.

First, the cylinder device is explained. The present invention uses, as the two air pressure filled cylinders communicated with each other, multistage cylinders built with first-stage cylinders 2A and 2B, second-stage cylinders 8A and 8B, and third-stage cylinders 9A and 9B, and the first-stage cylinders 2A and 2B are communicated with each other via a pipe 57.

The second-stage cylinders 8A and 8B and the third-stage cylinders 9A and 9B are configured as small diameter cylinders connected to the first-stage cylinders 2A and 2B one after another, such that the cylinders form one multistage cylinder as a whole.

The multistage cylinders built with the first-stage cylinders 2A and 2B, the second-stage cylinders 8A and 8B, and the third-stage cylinders 9A and 9B are provided in two lines, one on the left and the other on the right, between the frames 1A and 1B, and multistage pistons built with first-stage pistons 12A and 12B, second-stage pistons 30A and 30B, and third-stage pistons 31A and 31B are placed in such a way that they are housed in the first-stage cylinders 2A and 2B, the second-stage cylinders 8A and 8B, and the third-stage cylinders 9A and 9B, respectively. In reference signs, A primarily indicates those related to the left-hand multistage cylinder and other device portions shown in the figure, and B primarily indicates those related to the right-hand one.

The third-stage cylinders 9A and 9B contribute to torque obtained by increasing and decreasing the piston pressure of the final-stage cylinder, and, over the third-stage cylinders 9A and 9B, third-stage cylinder compression pressure receiving/driving cylinders 10A and 10B slidably fit. The third-stage cylinder compression pressure receiving/driving cylinders 10A and 10B form a transmission mechanism contributing to torque obtained by increasing and decreasing the piston pressure of the final-stage cylinder.

In the figure, 3A and 3B denote cover plates blocking the upper parts of the first-stage cylinders 2A and 2B, 4A, 4B, 4C, and 4D denote clamping bolts, 11 denotes a cylinder clamping bolt, and 5A, 5B, 5C, 5A2, 5B2, 5C2, 25A, 25B, 26A, 26B, 27A, 27B, 28A, and 28B denote O-rings.

In the figure, 51 denotes a pressure vessel, which is configured so as to fill the first-stage cylinders 2A and 2B with pressure air via a pressure reducing valve 52 through the pipe 57 via which the first-stage cylinders 2A and 2B are communicated with each other. The pipe 57 penetrates the cover plates 3A and 3B, allowing the first-stage cylinders 2A and 2B to be communicated with each other. In addition, a pressure gage 56 is provided at the midpoint in the fill pressure pipe 57.

The first-stage pistons 12A and 12B, the second-stage pistons 30A and 30B, and the third-stage pistons 31A and 31B have filled air pressure fluid circulation paths 22A and 22B formed therein so as to pass through the pistons along the length thereof, and, via the filled air pressure fluid circulation paths 22A and 22B, the chambers of the first-stage cylinders 2A and 2B, the second-stage cylinders 8A and 8B, and the third-stage cylinders 9A and 9B are communicated with one another. 13A and 13B denote fluid circulation paths via which the first-stage cylinders 2A and 2B and the filled air pressure fluid circulation paths 22A and 22B are respectively communicated with each other.

The diameter of the filled air pressure fluid circulation paths 22A and 22B is expanded inside the first-stage cylinders 2A and 2B, forming chamber-like space therein. Receiving stoppers 14A and 14B of piston hanger rods 15A and 15B are screwed into the chamber-like space, so as to lock the downward movement of the piston hanger rods 15A and 15B.

The first-stage cylinders 2A and 2B are, the chambers located below the first-stage pistons 12A and 12B are provided for atmospheric pressure and have atmospheric pressure air intake and exhaust ports 21A and 21B formed therein so as to be communicated with atmospheric pressure.

Moreover, to the third-stage cylinders 9A and 9B, third-stage pressure indication circulation paths 23A and 23B are connected, and the third-stage pressure indication circulation paths 23A and 23B are provided with pressure indicators 24A and 24B and blow valves 29A and 29B.

Next, the external input device by which the piston rods of the pistons are made to reciprocate alternately is explained.

In the figure, 33 denotes a rotating shaft rotatably attached to the frames 1A and 1B via a bearing, the rotating shaft 33 is provided with piston hanger plates 37A and 37B such that they can swing like a pendulum, a pin 38 is provided for them, and a center of a piston hanger swing lever 41 is rotatably connected to the pin 38. The piston hanger plates 37A and 37B are provided to deal with the vibrations or the like and to make the device easy to dismantle, and have notches in the lower parts thereof in which bearings 40A and 40B of intermediate gears 39A and 39B, which will be described later, fit.

To the left and right sides of the piston hanger swing lever 41, the ends of the piston hanger rods 15A and 15B are connected in such a way that they can be freely bent via joint couplings 43A and 43B formed with joint coupling connecting pins 45A and 45B. The piston hanger rods 15A and 15B are pipe-like hollow bodies, and have, at the upper ends thereof, ring sections into which the joint coupling connecting pins 45A and 45B are inserted and, at some midpoint therein, elongate holes formed longitudinally, the holes through which valve pressing rod connecting pins 47A and 47B provided at the upper ends of valve pressing rods 16A and 16B, which will be described later, can slide.

The bottoms in the expanded diameter chambers of the filled air pressure fluid circulation paths 22A and 22B, the chambers being part of the first-stage cylinders 2A and 2B, form valve seats, and valves 17A and 17B are provided therein such that the filled air pressure fluid circulation paths 22A and 22B can be opened and closed freely. The valves 17A and 17B are provided at the tips of the valve pressing rods 16A and 16B in a pivot-like manner with valve freely-clamping nuts 18A and 18B, such that they can be opened and closed by the push and pull movement of the valve pressing rods 16A and 16B.

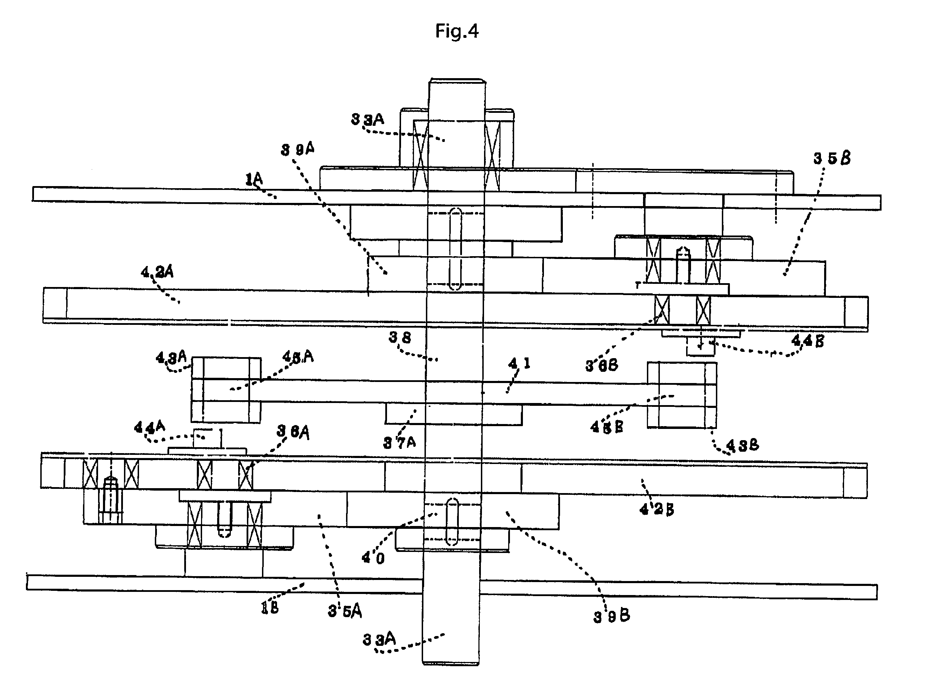

The pin 38 is turnably placed through the central part of valve switching swing levers 42A and 42B, and bearings 36A and 36B are provided in such a way that they are reciprocated in long grooves formed in the left and right sides respectively of the valve switching swing levers 42A and 42B. Incidentally, as shown in FIG. 4, the valve switching swing levers 42A and 42B are provided so as to be located before and behind the piston hanger swing lever 41.

The bearings 36A and 36B are eccentrically provided in valve switching gears 35A and 35B, and the valve switching gears 35A and 35B mesh with the intermediate gears 39A and 39B rotated by a gear of a drive motor 48. The valve switching gear 35A and the valve switching gear 35B rotate in opposite directions.

As described above, when the valve switching gears 35A and 35B are rotated by the motor 48 via the intermediate gears 39A and 39B, the movements of the bearings 36A and 36B make the left and right sides of the valve switching swing levers 42A and 42B swing up and down with respect to the pin 38.

Incidentally, as a power source of the drive motor 48, it is possible to use a sunlight solar panel plate 49 or a battery 50. In addition, it is also possible to use electric power produced by a generator 53, which will be described later.

The valve switching swing levers 42A and 42B are provided with connecting-rod connecting pins 44A and 44B, to which connecting rods 46A and 46B are connected. Furthermore, the valve pressing rods 16A and 16B are connected to the connecting rods 46A and 46B with the valve pressing rod connecting pins 47A and 47B.

In this way, the valve pressing rods 16A and 16B hang from the valve switching swing levers 42A and 42B, and the valve pressing rods 16A and 16B are inserted into the piston hanger rods 15A and 15B in such a way that they can freely move up and down.

Next, the rotation output extracting mechanism that makes the pistons reciprocate alternately and obtains torque by this reciprocating movement is explained.

The third-stage cylinder compression pressure receiving/driving cylinders 10A and 10B provided in the third-stage cylinders 9A and 9B are cylinders that slide and repeat expansion and contraction as a result of the third-stage cylinders 9A and 9B being filled with compressed air, connecting rod mounting bearings and pins 62A and 62B provided at the tips thereof and connecting rod mounting bearings and pins 61A and 61B eccentrically provided in output rotating gears 59A and 59B are connected to each other with connecting rods 60A and 60B forming a link mechanism, one-way clutch-equipped gears 71A2 and 71B2 mesh with the output rotating gears 59A and 59B, and an intermediate rotating shaft 71 rotating with them is provided with intermediate gears 71A1 and 71B1.

The one-way clutch-equipped gears 71A2 and 71B2 are allowed to choose which of the intermediate gears 71A1 and 71B1 with which they will mesh via a clutch gear. In the figure, 73A denotes a clutch switch lever, and, by moving it from side to side, it is possible to choose a gear, which meshes with the intermediate gears 71A1 and 71B1. This makes it possible to change from slow to fast rotation by means of a variable speed mechanism from the intermediate rotating shaft 71. In the figure, 72 denotes an output rotating shaft.

In addition, the third-stage cylinder compression pressure receiving/driving cylinders 10A and 10B are provided with atmospheric pressure air discharge pump pistons 63A and 63B, which are connected to a pressure vessel 67 with pipes 65 and 66 to make it possible for them to store pressure air. The pressure vessel 67 is connected to the fill pressure pipe 57 with a pipe 68 to make it possible to replenish the first-stage cylinders 2A and 2B with pressure air. The pipe 68 is provided with a check valve 69 and a safety valve 70.

Next, how to use it and how it operates are explained. The first-stage cylinders 2A and 2B, the second-stage cylinders 8A and 8B, and the third-stage cylinders 9A and 9B of the multistage cylinders are filled with air at the order of 1 MPa from the pressure vessel 51 via the pressure reducing valve 52 or with a hand or foot-operated pump until the set pressure is reached. In this state, both the valves 17A and 17B are opened, and the first-stage cylinders 2A and 2B, the second-stage cylinders 8A and 8B, and the third-stage cylinders 9A and 9B are communicated with one another via the filled air pressure fluid circulation paths 22A and 22B.

This is a resting state in which everything is motionless. This state results from filling of air pressure, and a resting state in which the above piston pressure hangs from the piston hanger swing lever 41 is maintained. (the back pressure of the first-stage pistons 12A and 12B is not applied)

Basic data (1 horsepower = 75 kg·m/s) for the selection of models is as follows.
The diameter of the first-stage pistons 12A and 12B is φ100; a fill pressure of 1 MPa = 785.0 kgf
The diameter of the second-stage pistons 30A and 30B is φ63; a fill pressure of 1 MPa = 311.5 kgf
The diameter of the third-stage pistons 31A and 31B is φ50; a fill pressure of 1 MPa = 196.2 kgf

As shown in FIG. 1, in the valve switching gears 35A and 35B, the bearings 36A and 36B are in a horizontal, 180-degree position, and they are horizontally placed in the long grooves of the valve switching swing levers 42A and 42B.

As for the piston hanger swing lever 41 and the valve switching swing levers 42A and 42B, the role of the piston hanger swing lever 41 is to hang each piston, and, as it swings, the valve switching swing levers 42A and 42B close one valve and open the other valve instantaneously and simultaneously via the valve pressing rods 16A and 16B by the rotation of the valve switching gears 35A and 35B.

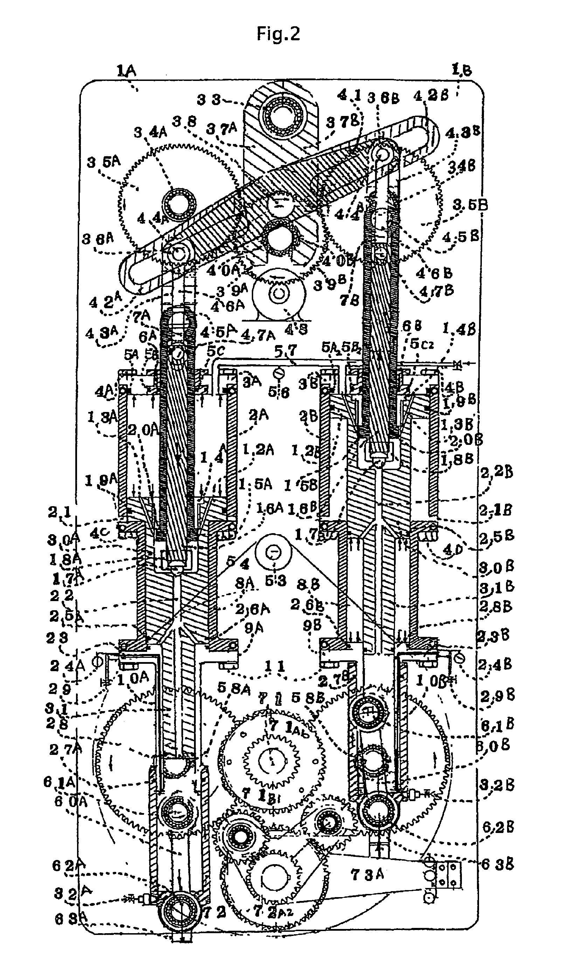

When the motor 48 is driven with electricity from the sunlight solar panel plate 49, or various batteries, the battery 50, and the like, a gear of the motor 48 meshes with the intermediate gears 39A and 39B, and the intermediate gears 39A and 39B mesh with the valve switching gears 35A and 35B. This causes the valve switching gears 35A and 35B to rotate, whereby the positions of the bearings 36A and 36B fixed to the gears instantaneously change to those shown in FIG. 2. As a result, the valve switching swing levers 42A and 42B lean to one side. (in FIG. 2, lean to the left)

As a result, the valve pressing rod 16A moves downward, and the valve 17A is closed; the valve pressing rod 16B moves upward, and the valve 17B is opened.

As a result of the valve 17A being closed, the filled air pressure is, the first-stage cylinder 2A is hermetically sealed, and theoretical thrust of 785.0 kgf when φ100 + fill pressure = 1 MP = air pressure is produced in the chamber of the first-stage cylinder 2A, whereby the first-stage piston 12A is pushed downward. As a result, the first-stage piston 12A, the second-stage piston 30A, and the third-stage piston 31A move downward.

In the second-stage pistons 30A and 30B, air is compressed to φ63 + fill pressure = 1 MP = 311.5 kgf and is pushed out into the chamber, and flows into the third-stage cylinder 9A. In the third-stage cylinder 9A, fill pressure φ50 + fill pressure = 1 MP = 196.2 kgf is increased to at least 390 kgf or more, and thrust several times higher than the theoretical thrust, which is an output at an air pressure is produced and is displayed on the pressure indicator 24A.

In this third-stage cylinder 9A, the fill pressure makes the third-stage cylinder compression pressure receiving/driving cylinder 10A slide, and this thrust push-out amount is used as output/workload.

The valve 17A is closed, the first-stage cylinder 2A is hermetically sealed, and a thrust push-out amount is produced; in the first-stage cylinder 2B, the valve 17B remains open, and an initial fill pressure is maintained. However, as a result of the first-stage piston 12A, the second-stage piston 30A, and the third-stage piston 31A moving downward, the piston hanger swing lever 41 leans to one side (in the figure, leans to the left). This causes the first-stage piston 12B, the second-stage piston 30B, and the third-stage piston 31B to move upward via the piston hanger rod 15B or as a result of air inside the first-stage piston 12B being sucked into the first-stage cylinder 2A.

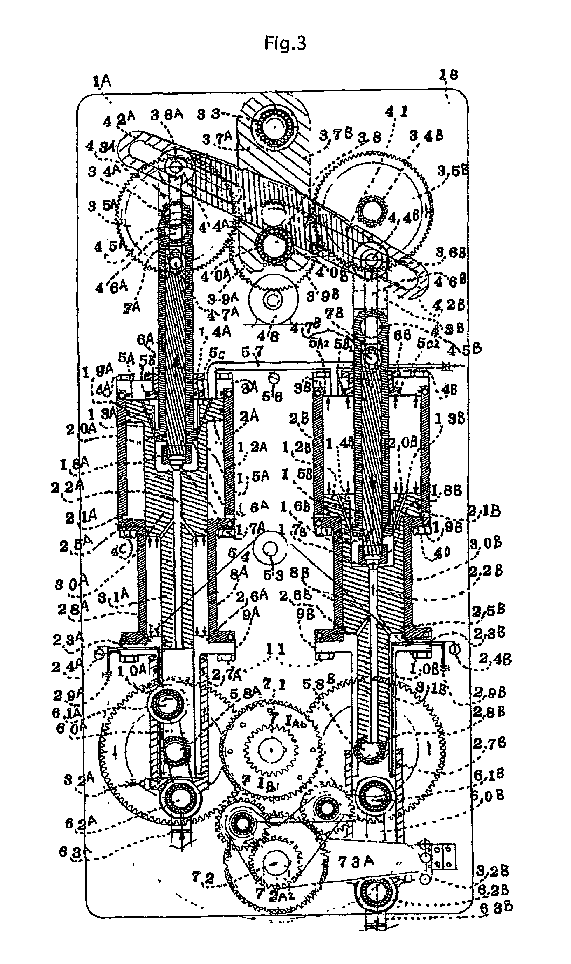

As shown in FIG. 3, when switching is performed in such a way that the valve switching swing levers 42A and 42B lean to the right, the valve pressing rod 16B moves downward, and the valve 17B is closed.

The valve 17B is closed, the first-stage cylinder 2B is hermetically sealed, the first-stage piston 12B, the second-stage piston 30B, and the third-stage piston 31B move downward, and a thrust push-out amount is produced; in the first-stage cylinder 2A, the valve 17A remains open, and, likewise, the first-stage piston 12A, the second-stage piston 30A, the third-stage piston 31A move upward.

By performing those described above alternately, it is possible to obtain output proportional to the fill pressure. (repeatedly perform tight pushing out of air pressure and restoring of fill pressure)

With the third-stage cylinder compression pressure receiving/driving cylinders 10A and 10B provided in the third-stage cylinders 9A and 9B, a rotation output is produced in the intermediate rotating shaft 71, the rotation output rotates a rotating body 55 and thereby drives the dynamo speed increasing rotating generator 53, and changing from slow to fast rotation is performed by the variable speed mechanism, whereby the output rotating shaft 72 is driven and rotated. By providing the output rotating shaft 72 with a wheel or the like, it is possible to use it as a driving engine of a traveling body.

In addition, since leakage of air pressure occurs during a prolonged operation, air is automatically supplied with the atmospheric pressure air discharge pump pistons 63A and 63B.

Although the embodiment described above deals with a case in which, as shown in the figures, in the frames 1A and 1B, in the multistage cylinders built with the first-stage cylinders 2A and 2B, the second-stage cylinders 8A and 8B, and the third-stage cylinders 9A and 9B, the multistage cylinders built with the first-stage cylinders 2A and 2B, the second-stage cylinders 8A and 8B, and the third-stage cylinders 9A and 9B housing the multistage pistons built with the first-stage pistons 12A and 12B, the second-stage pistons 30A and 30B, and the third-stage pistons 31A and 31B are vertically provided in two lines, one on the left and the other on the right, it is also possible to provide them in two lines horizontally or diagonally. In such a case, the role of the piston hanger swing lever 41 is just to lock each piston in place rather than to hang it.

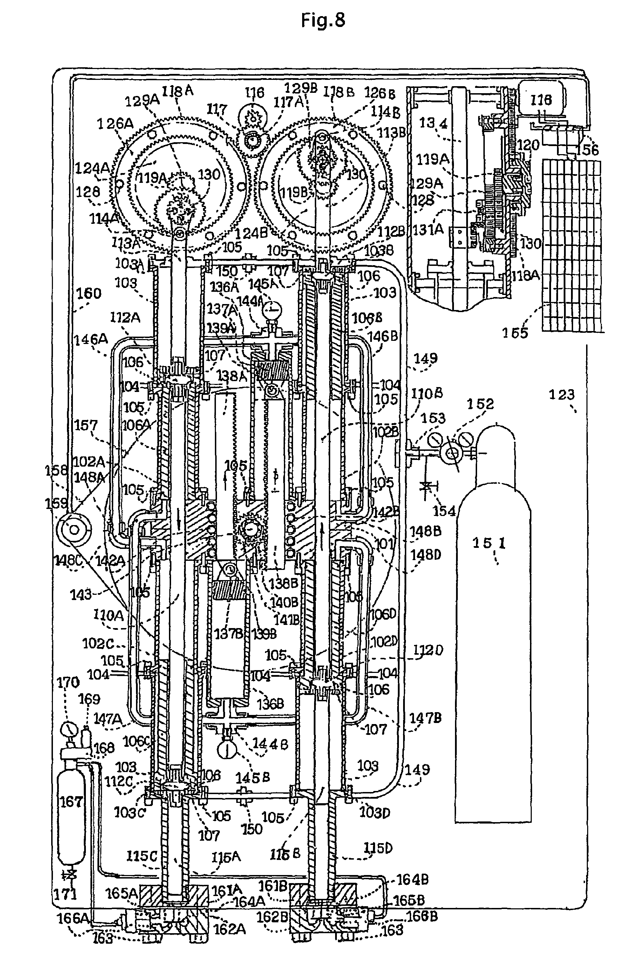

FIG. 8 is an explanatory diagram showing a second embodiment of a drive device using the circulation of filled air according to the invention, and, in the figure, 101 denotes a cylinder fixed base. The second embodiment is the same as the first embodiment described above in that it basically includes a cylinder device in which two air pressure filled cylinders are communicated with each other, pistons of the cylinders are pressurized under the same pressure by compressed air fed to each cylinder, and piston rods of the pistons are made to reciprocate alternately by an external input device, an external input device feeding an external input to it, and a rotation output extracting mechanism that makes the pistons of the cylinders reciprocate alternately and obtains torque by this reciprocating movement.

On both sides of the cylinder fixed base 101, first-stage cylinders 103A, 103B, 103C, and 103D of cylinders 103 serving as a pair of air-filled cylinders and second-stage cylinders 102A, 102B, 102C, and 102D are hermetically attached. In the figure, the first-stage cylinder 103A and the second-stage cylinder 102A located in the upper left portion and the first-stage cylinder 103C and the second-stage cylinder 102C located in the lower left portion have a piston rod 110A in common, and the first-stage cylinder 103B and the second-stage cylinder 102B located in the upper right portion and the first-stage cylinder 103D and the second-stage cylinder 102D located in the lower right portion have a piston rod 110B in common.

The first-stage cylinders 103A, 103B, 103C, and 103D, and the second-stage cylinders 102A, 102B, 102C, and 102D are fastened to the cylinder fixed base 101 with clamping bolts 105.

The piston rod 110A is provided with a multistage piston into which a first-stage piston 106 and a second-stage piston 106A are integrated together inside the first-stage cylinder 103A and the second-stage cylinder 102A, and is provided with a multistage piston into which a first-stage piston 106 and a second-stage piston 106C are integrated together inside the first-stage cylinder 103C and the second-stage cylinder 102C.

Likewise, the piston rod 110B is provided with a multistage piston into which a first-stage piston 106 and a second-stage piston 106B are integrated together inside the first-stage cylinder 103B and the second-stage cylinder 102B, and is provided with a multistage piston into which a first-stage piston 106 and a second-stage piston 106D are integrated together inside the first-stage cylinder 103D and the second-stage cylinder 102D.

In the figure, 103 denotes a first-stage cylinder through which the above-described first-stage piston 106 moves, and one end thereof is closed with a cover plate with an O-ring. These cover plates with an O-ring are each provided with a joint attaching port of a fill pressure filling pipe. Moreover, the first-stage cylinder is provided, at the other end thereof, with an intake and exhaust port 104 around a lower flange section.

These four multistage pistons are provided with valves 112A, 112B, 112C, and 112D, respectively.

107 denotes a valve receiving plate, and 107A, 107B, 107C, and 107D denote fluid circulation ports. 108 denotes a valve receiving plate clamping bolt, 109 denotes an O-ring, and 111 denote valve freely-clamping split screws, which nip at depressions in the valves 112A, 112B, 112C, and 112D and freely clamp the valves 112A, 112B, 112C, and 112D above and below the piston rods 110A and 110B.

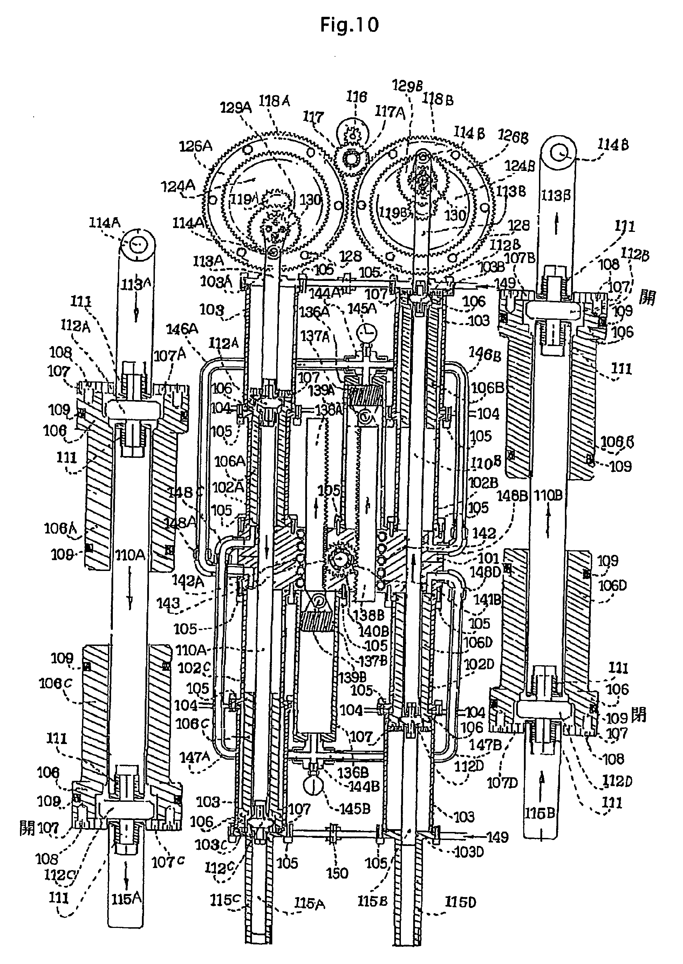

With the valve freely-clamping split screws 111 described above, the valves 112A, 112B, 112C, and 112D can cope with some inclination, and opening and closing is performed by the relationship with the four multistage pistons and the cylinders 103. In FIG. 10, on the left side thereof showing the piston rod 110A, the upper valve 112A is a closed valve, and the lower valve 112C is an open valve; on the right side thereof showing the piston rod 110B, the upper valve 112C is an open valve and the lower valve 112D is a closed valve.

In the center of the above-described cylinder fixed base 1, output gears 140A and 140B are attached, and, in the center, rack-equipped pistons 137A and 137B of a pair of pressure concentration cylinders 136A and 136B which sandwich the output gears 140A and 140B and mesh with racks 138A and 138B are fastened with the clamping bolts 105.

The pressure concentration cylinders 136A and 136B are attached with the output gears 140A and 140B of the cylinder mount 101 placed between them and are assembled so as to mesh with the output gears 140A and 140B with the racks 138A and 138B.

The racks 138A and 138B are connected to the rack-equipped pistons 137A and 137B with connecting pins 139A and 139B, mesh with the output gears 140A and 140B from above and below, and are assembled on the cylinder mount 101. 141A and 141B denote one-way clutches, which are press-fitted in the inside diameters of the output gears 140A and 140B.

Rack transferring and receiving bearings 142A and 142B prevent the rack from swinging by bringing a face of the rack into contact with the cylinder mount 101, and serve an important role in particular when the rack is moved with a long stroke. Several rack transferring and receiving bearings 142A and 142B are rotatably attached to the cylinder mount 101 individually.

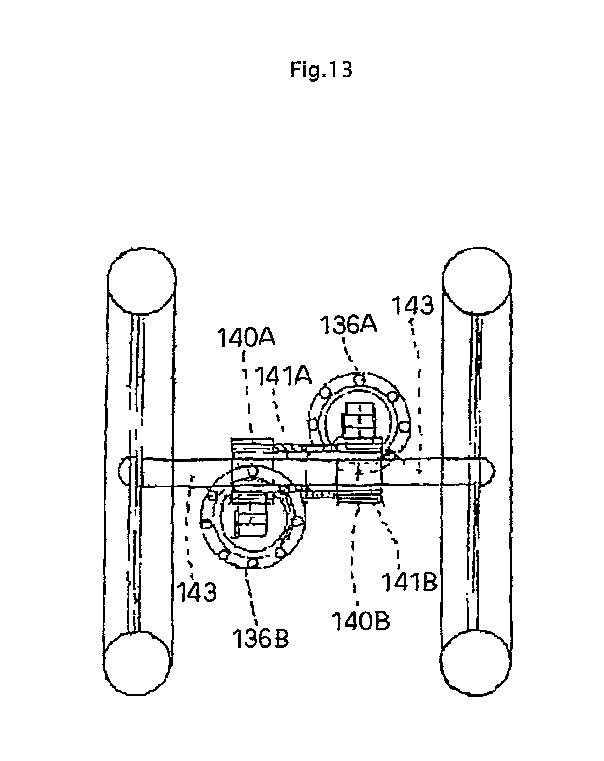

As shown in FIG. 13, an output-shaft rotating shaft 43 is rotatably attached via bearings at both ends (not shown), and has at both ends thereof travelling means such as tires, pulleys for other drive/transmission mechanisms, or the like. In the middle of the output-shaft rotating shaft 143, the output gears 140A and 140B are attached on the left and right with the one-way clutches 141A and 141B press-fitted in the inside diameters thereof with a left or right rotation load setting.

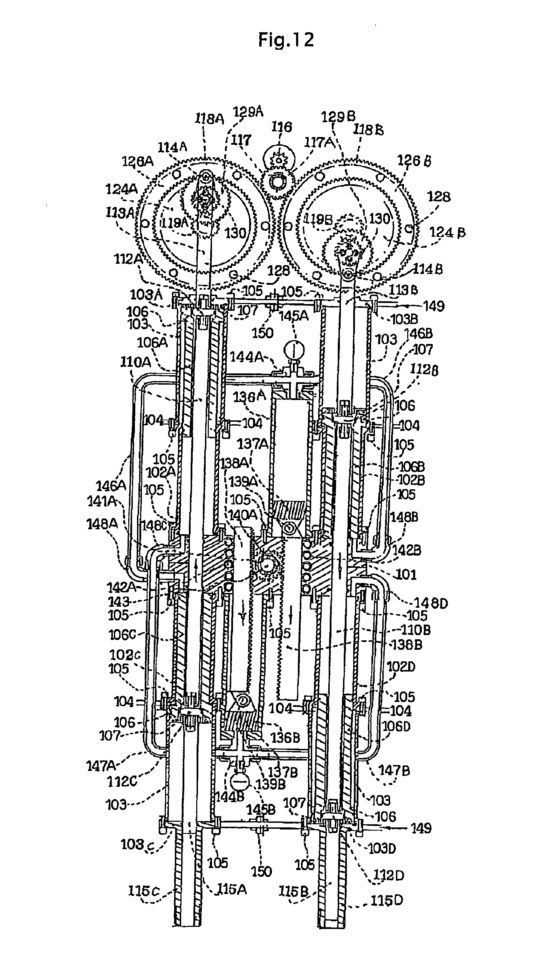

When the rack-equipped pistons 137A and 137B move simultaneously in a direction indicated with an arrow in FIG. 12, a load is applied to the one-way clutch 141A of the rack-equipped piston 137A; no load is applied to the one-way clutch 141B of the rack-equipped piston 137B, and transmission is performed on an idle running output shaft.

When they move in a direction indicated with an arrow in FIG. 8, a load is applied to the one-way clutch 141B of the rack-equipped piston 137B; no load is applied to the one-way clutch 141A of the rack-equipped piston 137A, and torque is unidirectionally transmitted to the idle running output shaft. Continuous smooth torque can be obtained. Connecting a variable consecutive machine to them makes it possible to select torque at will.

In FIG. 8, 144A and 144B denote four-way joints provided in the pressure concentration cylinders 136A and 136B, 145A and 145B denote pressure gages, and 146A, 146B, 147A, and 147B denote pipes connecting the pressure concentration cylinders 136A and 136B and the cylinders 102A and 102C and the cylinders 102B and 102D, which serve as a pair of air-filled cylinders. The pipes 147A and 147B are required to move filled fluid quickly. In particular, when the inside diameter of a pipe is small, a resistance value is generated, and generating sound is produced. In narrow spaces, flexible hoses are used as these pipes 146A, 146B, 147A, and 147B. 148A, 148B, 148C, and 148D denote pipe connection joints.

The pipe 146A connects the cylinder 102C and the pressure concentration cylinder 136A, and the pipe 146B connects the cylinder 102B and the pressure concentration cylinder 136A. The pipes 146A and 146B join together at the four-way joint 144A, and are connected to the pressure concentration cylinder 136A.

Likewise, the pipe 147A connects the cylinder 102A and the pressure concentration cylinder 137B, and the pipe 147B connects the cylinder 102D and the pressure concentration cylinder 137B. The pipes 147A and 147B join together at the four-way joint 144B, and are connected to the pressure concentration cylinder 136B. The pressure gages 145A and 145B are provided for making it possible to check a change of pressure that occurs when filled fluid moves and circulates alternately into the pressure concentration cylinders 136A and 136B.

The cylinders 102A and 102C and the cylinders 102B and 102D are, when the valves 112A, 112B, 112C, and 112D are opened, a first-stage piston chamber and a second-stage piston chamber of the multistage piston are communicated with each other.

In addition, one surface of each of the valves 112A, 112B, 112C, and 112D is opened such that filled fluid flows from the first-stage piston chamber into the second-stage piston chamber, that is, under the second-stage piston moving down, along with the piston rods 110A and 110B via the valve receiving plates 107.

The piston rods 110A and 110B have at the upper parts thereof piston rods 113A and 113B formed so as to extend therefrom, the piston rods 113A and 113B have at the upper parts thereof piston rod connection pins 114A and 114B, the piston rods 110A and 110B have at the lower parts thereof piston rods 115A and 115B formed so as to extend therefrom, and the piston rods 115A and 115B are housed in third-stage cylinders 115C and 115D. The cylinders 115C and 115D are provided with pressure air filling means in which air intake and exhaust valve mounting flanges 161A and 161B and air intake and exhaust valve blocks 162A and 162B are assembled together with clamping bolts 163 and air intake valves 164A and 164B (equipped with a spring) and air discharge valves 165A and 165B (equipped with a spring) are housed therein, and a pressure vessel 167 is connected thereto via clamping joints 166A and 166B provided on the pressure air filling means. In the figure, 168 denotes a safety valve block provided on the pressure vessel 167, 169 denotes a safety valve, 170 denotes a pressure gage, 171 denotes a blow valve, and 172 denotes an atmospheric pressure air intake and exhaust pipe.

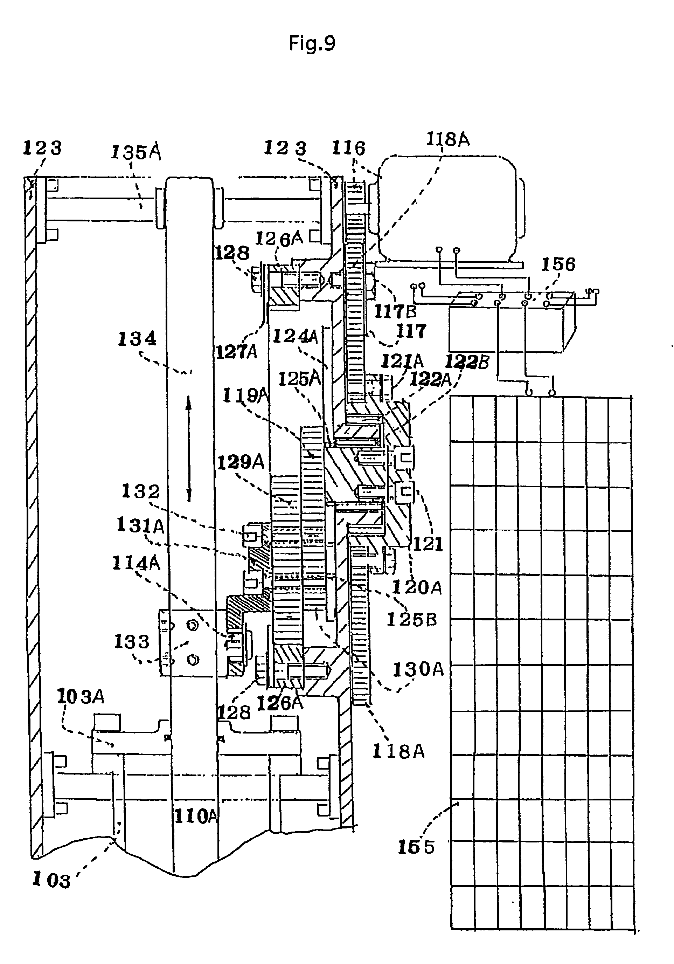

In FIGS. 8 and 9, in a pinion-equipped motor 116 driven as an input section by sunlight solar, various batteries, or a commercial power source, it meshes via an intermediate gear 117 with both of main wheels 118A and 118B attached to the frame.

120A and 120B denote device boxes, which are fastened to the main wheels 118A and 118B with clamping bolts 121 and 121A. Bearings 122A and 122B are press-fitted in the device boxes 120A and 120B, rotating plates 124A and 124B are inserted into the boss sections of pinions 119A and 119B, bearings 125A and 125B are press-fitted in them, and they are rotatably placed between frames 123 and are fastened with the clamping bolts 121.

Internal gears 126A and 126B are fastened to the frames 123, radial gears 129A and 129B which mesh with the internal gears 126A and 126B have a size equal to the radius of the internal gears 126A and 126B, and pinions 130A and 130B are fixed to them with a clamping bolt 132 along with levers 131A and 131B coupled to the piston rods 113A and 113B.

In FIGS. 8 and 9, 133A and 133B denote piston rod driving hardware, 134 denotes a piston rod, and 135A and 135B denote piston rod steady braces. Although the piston rod 134 is connected above the piston rods 113A and 113B to prevent runout, such a runout prevention mechanism is not always necessary.

In FIG. 8, 149 denotes a fill pressure pipe, which is connected by using union joints 150, 150A, and 150B, extends from a pressure vessel 151 via a pressure reducing valve 152, forms a branched pipe via a three-way joint 153, and is connected to the cylinders 102A and 102C and to the cylinders 102B and 102D. 154 denotes a blow valve placed between the pressure reducing valve 152 and the three-way joint 153.

In this way, it is possible to fill the device from the pressure vessel 151 automatically or manually by specifying it with the pressure reducing valve 152, or to electrically fill it remotely.

In FIG. 8, 155 denotes a sunlight solar panel plate, which always charges a battery 156 when the sky is clear. The battery 156 serves as a power source for the pinion-equipped motor 116.

A rotating body 157 rotates while being attached to the above-described output-shaft rotating shaft 143, and a generator 159 may be rotated with the rotation of the rotating body 157 via a belt facing them, such that electricity thus generated is stored in the above-described battery 156. By doing so, there is no possibility that the filled fluid pollutes the atmosphere, which is air pressure. It has a great advantage in that charging can always be performed.

Next, how to use it and how it operates are explained. First, to explain them based on FIG. 8, before use, an attempt is made to fill the whole device with air from the pressure vessel 151 via the pressure reducing valve 152 and the fill pressure pipe 149. The cover plates of the first-stage cylinders 103 are each fixed to one surface of each second-stage cylinder fixed to the cylinder fastened base 101, and the fill pressure pipe 149 is connected to the cover plates. To them, the above-described pipe connection air is supplied. This is a resting state in which the valves 112A, 112B, 112C, and 112D freely fastened to the piston rods 110A and 110B are in an open state, it is filled with uniform air pressure, and air pressure fills the space above and below the concentration cylinders 136A and 136B and moves nowhere. This state is observed when the medium gears 129A and 129B are in a horizontal, 180-degree position.

Next, with the rotation of the motor 116, the piston rods 110A and 110B instantaneously move up and down simultaneously, and, as shown in FIGS. 8 to 10, the valve 112A at the upper left is closed, the valve 112D at the lower right is closed, the valve 112B at the upper right is opened, the valve 112C at the lower left is opened, the first-stage cylinder 103A and the first-stage cylinder 103D of the cylinders 103 are hermetically sealed instantaneously (theoretical thrust when cylinder inside diameter: medium + fill pressure = air pressure is produced), and they are combined to become several times higher than the fill pressure and are supplied to and discharged from the concentration cylinders 136A and 136B alternately. At the same time, the valve 112B is opened, and the valve 112C is opened, whereby the filled air pressure is made to circulate. The valves 112A, 112B, 112C, and 112D repeat the movements from side to side and up and down.

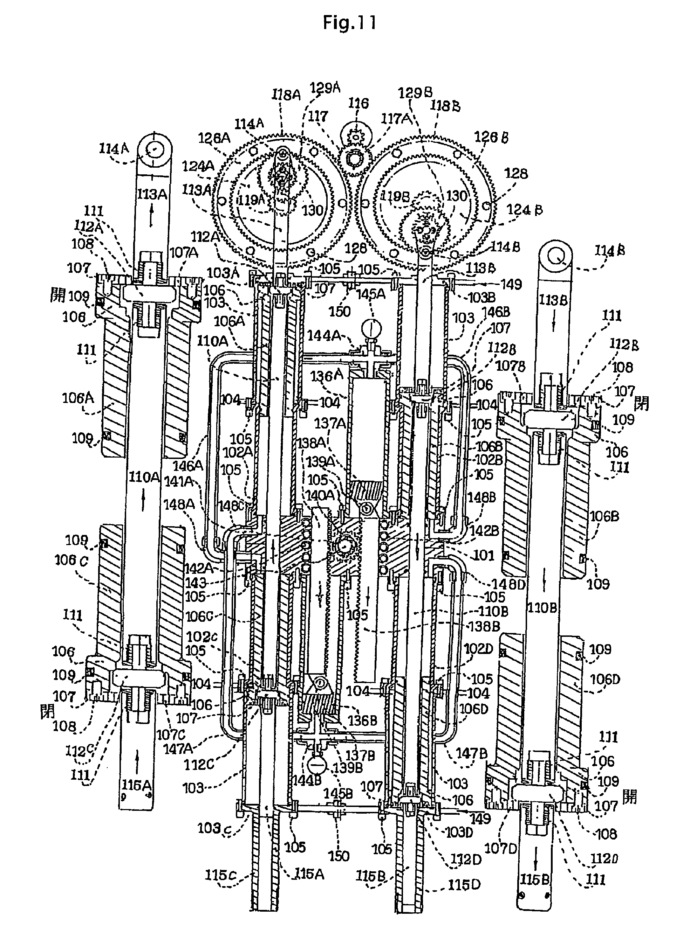

Incidentally, with the rotation of the motor 116, when the piston rods 110A and 110B instantaneously move up and down simultaneously, as shown in FIGS. 11 and 12, the valve 112B at the upper right is closed, the valve 112C at the lower left is closed, the valve 112A at the upper left is opened, the valve 112D at the lower right is opened, the first-stage cylinder 103C and the first-stage cylinder 103B of the cylinders 103 are hermetically sealed instantaneously (theoretical thrust when cylinder inside diameter: medium + fill pressure = air pressure is produced), and they are combined to become several times higher than the fill pressure and are supplied to and discharged from the concentration cylinders 136A and 136B alternately. At the same time, the valve 112A is opened, and the valve 112D is opened, whereby the filled air pressure is made to circulate. The valves 112A, 112B, 112C, and 112D repeat the movements from side to side and up and down.

The concentration cylinders 136A and 136B and the device are required to be always filled with fill pressure. The valves 112A, 112B, 112C, and 112D alternately open and close simultaneously with the up-and-down movements of the piston rods 110A and 110B. Thus, the important main point is the generation of theoretical thrust at an alternate air pressure of the first-stage cylinders 103A, 103B, 103C, and 103D of the cylinders 103. The fill pressure is compressed and is sent to the concentration cylinders 136A and 136B alternately. One becomes several times (+) higher than the fill pressure, and the other exhibits fill pressure (-). This is repeated alternately.

Incidentally, the above state can be obtained automatically by opening the pressure reducing valve 152. Depending on circumstances, it can be obtained by switching the valve switching of the valves 112A, 112B, 112C, and 112D of the piston rods 110A and 110B as follows: the motor 116 is driven by the battery 156 or commercial power source, the main wheels 118A and 118B are driven and rotated with the pinion of the motor 116 via the intermediate gear 117, with the rotation of the main wheels 118A and 118B, which corresponds to the rotation of the pinions 119A and 119B, the pinions 130 which mesh with them rotate, the radial gears 129A and 129B integrated with the pinions 130 rotate, the radial gears 129A and 129B rotate while rotating on their axes along the internal gears 126A and 126B, and the left and right piston rods 110A and 110B move up and down with that rotation.

When the state of FIG. 8 is obtained, as a result of the pistons 106 and 106A moving downward in the upper left cylinder 102A and the pistons 106 and 106D moving upward in the lower right cylinder 2B, fill pressure of the first-stage cylinder 103A at the upper left and the first-stage cylinder 103D at the lower right is sealed and is pressed and added to become a boosted pressure proportional to the diameter of the gear, and the multistage piston at the upper left composed of the first-stage piston 106 and the second-stage piston 106A integrated together and the multistage piston at the lower right composed of the first-stage piston 106 and the second-stage piston 106D integrated together are pushed and moved, whereby the existing air is compressed.

The compressed air inside the cylinder 102A and the cylinder 102D flows together at the four-way joint 144B of the pipes 147A and 147B, flows into the pressure concentration cylinder 136B which is a left rack-equipped piston chamber, becomes a boosted pressure of the fill pressure, and is displayed on the pressure gage 145B.

The fill pressure fluid pushes the rack-equipped piston 137B in the pressure concentration cylinder 136B with the boosted push-out amount, and rotates the output gear 140B with the rack 138B, whereby torque is transmitted to the output-shaft rotating shaft 143 by the one-way clutch 141B.

With respect to the input of rotation of the pinion of the above-described motor 116, the main wheel 118A and the main wheel 118B rotate in opposite directions, and the up-and-down movements of the left and right piston rods 110A and 110B are also relative movements.

As described above, by inputting the rotation of the pinion of the motor 116 to the intermediate gear 117, a significantly boosted pressure is obtained according to the ratio of the size of a larger gear to the size of a smaller gear, whereby it is possible to achieve the valve switching of the valves 112A, 112B, 112C, and 112D of the piston rods 110A and 110B.

The valves 112A, 112B, 112C, and 112D can provide for prevention of runout of the piston rods 110A and 110B as a result of the valve freely-clamping split screws 111 being attached to the piston rods 110A and 110B by nipping at the depressions in the valves, and the valve freely-clamping split screws 111 serve as universal joint couplings, making it possible to cope with inclination.

When input of the rotation of the pinion of the motor 116 continues, transition is made from the state shown in FIGS. 8 and 10 to the state shown in FIGS. 11 and 12.

The left piston rod 110A is moved upward, and the right piston rod 110B is moved downward. The left and right piston rods 110A and 110B move up and down as described above with a boosted pressure proportional to the diameters of a large-diameter gear and a small-diameter gear.

In the state shown in FIGS. 11 and 12, in the valves 112A, 112B, 112C, and 112D connected to the piston rods 110A and 110B, the valve 112A at the upper left is opened and the valve 112C at the lower left is closed, and, at the same time, the valve 112D at the lower right is opened and the valve 112B at the upper right is closed.

In this state, fill pressure of the first-stage cylinder 103C at the lower left and the first-stage cylinder 103B at the upper right is sealed and is pressed and added to become a boosted pressure proportional to the diameter of the gear, and the multistage piston at the lower left composed of the first-stage piston 106 and the second-stage piston 106C integrated together and the multistage piston at the upper right composed of the first-stage piston 106 and the second-stage piston 106B integrated together are pushed and moved, whereby the existing air is compressed.

The compressed air inside the cylinder 102C and the cylinder 102B flows together at the four-way joint 144A of the pipes 146A and 146B, flows into the pressure concentration cylinder 136A which is a right rack-equipped piston chamber, becomes a boosted pressure of the fill pressure, and is displayed on the pressure gage 145A.

The fill pressure fluid pushes the rack-equipped piston 137A in the pressure concentration cylinder 136A with the boosted push-out amount, and rotates the output gear 140A with the rack 138A, whereby torque is transmitted to the output-shaft rotating shaft 143 by the one-way clutch 141A.

In this way, the above-described pair of pressure concentration cylinders 136A and 136B is filled with pressure fluid from the cylinders 102A and 102C and the cylinders 102B and 102D alternately, which serve as a pair of air-filled cylinders, and the rack-equipped pistons 137A and 137B also move alternately. When one pressure concentration cylinder is filled with air, air of the other pressure concentration cylinder is sucked out, whereby the left and right rack-equipped pistons 137A and 137B always repeat movements in the same direction.

As for the flow of the pressure filled air, the circulation movement of the filled fluid of one piston located at the lower left is as follows: in the lower left cylinder 102C, the chambers of the first-stage piston 106 and the second-stage piston 106C of the piston are communicated with each other, in addition, one surface of the valve 112C moves downward via the valve receiving plate 17C along with the piston rod 110A, and the filled fluid flows under the second-stage piston 106C; the circulation movement of the filled fluid of one piston located at the upper right is as follows: as a result of the valve 112B being opened in the upper right cylinder 102B, the chambers of the first-stage piston 106 and the second-stage piston 106B are communicated with each other, in addition, one surface of the valve 112B moves upward via the receiving plate 107B along with the piston rod 110B, air flows under the second-stage piston 106B, the bottom of the second-stage piston 106C at the lower left and the bottom of the second-stage piston 106B at the upper right form fill pressure together with the pressure concentration cylinder 136B of the rack-equipped piston 137B.

Likewise, the circulation movement of the filled fluid of one piston located at the upper left is as follows: in the lower left cylinder 102A, the chambers of the first-stage piston 106 and the second-stage piston 106A of the piston are communicated with each other, in addition, one surface of the valve 112A moves upward via the valve receiving plate 107A along with the piston rod 110A, and the filled fluid flows under the second-stage piston 106A; the circulation movement of the filled fluid of one piston located at the lower right is as follows: as a result of the valve 112D being opened in the upper right cylinder 102D, the chambers of the first-stage piston 106 and the second-stage piston 106D are communicated with each other, in addition, one surface of the valve 112D moves downward via the receiving plate 107D along with the piston rod 110D, air flows under the second-stage piston 106D, and the bottom of the second-stage piston 106A at the upper left and the bottom of the second-stage piston 106D at the lower right form fill pressure together with the pressure concentration cylinder 136A of the rack-equipped piston 137A.

The left and right sides repeat the above alternately. As in FIG. 10, the fluid is moved and circulated, and, when one stroke is ended, at the instant of moving into the operation of FIG. 11 with the rotation of the main wheels 118A and 118B, the valves attached to the upper and lower parts of the piston rods 110A and 110B are temporarily opened at the switching, and the pressure concentration cylinders 136A and 136B, part of which has been under high pressure, returns to the fill pressure.

As described above, when all of the valves 112A, 112B, 112C, and 112D are instantaneously opened concurrently with the end of the stroke, the pressure of the pressure concentration cylinders 136A and 136B, the pressure being a boosted pressure of the fill pressure, instantaneously returns to the fill pressure alternately. That is, the pressure, which has become high pressure is returned to the original fill pressure without exhausting air to the outside at each stroke. These are the technical bases on which the present invention places prime importance. This makes it possible to obtain output proportional to the fill pressure.

When all of the valves 112A, 112B, 112C, and 112D are instantaneously opened concurrently with the end of the stroke, the pressure on the left of the rack-equipped piston chamber, the pressure being a boosted pressure of the fill pressure, instantaneously returns to the fill pressure. That is, the pressure, which has become high pressure is returned to the original fill pressure without exhausting air to the outside. These technical bases are the main points.

According to the present invention, part of the fill pressure alternately becomes a boosted pressure of the fill pressure, eliminating the need to exhaust air alternately, and, by making the fluid move and circulate, it is possible to obtain a long stroke, a stroke of 300 to 500 mm or more, whereby it is possible to freely select the number of rotations of the output gear by performing one stroke.
The relationship among different members is as follows.

| | | |
|---|---|---|
| First-stage cylinders 3A, 3B, 3C, and 3D (diameter) [φ 125] | Theoretical thrust at an air pressure of 1 MPa and pressure receiving area | 1,227,0 kgf |
| Second-stage cylinders 2A, 2B, 2C, and 2D (diameter) [φ 63] | Theoretical thrust at an air pressure of 1 MPa and pressure receiving area | 311,5 kgf |
| Pressure concentration cylinders 36A and 36B (diameter) [φ 63] | Theoretical thrust at an air pressure of 1 MPa and pressure receiving area | 311,5 kgf |
| 15A, 15B, 15C, and 15D ... Piston atmosphere air supply (diameter) [φ 32] | Theoretical thrust at an air pressure of 1 MPa | 80, 4 kgf when pushed out |
| Piston rods 10A and 10B (diameter) [φ 32] | Theoretical thrust at an air pressure of 1 MPa | 80, 4 kgf when pushed out |

Basic data (1 horsepower = 75 kg·m/s) for the selection of models

Incidentally, with the up-and-down movements of the piston rods 110A and 110B, the pressure air filling means is driven by the piston rods 115A and 115B of the air supply piston, and atmospheric pressure air is sucked alternately via the air intake valves 164A and 164B, whereby it is possible to accumulate air pressure in the pressure vessel 167.

Moreover, electric power is generated by the generator 159 by the rotating body 157 of the output-shaft rotating shaft 143, and the electric power is accumulated in the battery 156. In this way, the battery 156 is always charged by the sunlight solar panel plate 155 when the sky is clear, and it can be stably charged by filling the air and liquid movement operation even if it rains or with no wind power.

[0140] In addition, since the cylinder 103 is provided, at the other end thereof, with the intake and exhaust port 104 around a lower flange section and the piston chamber to which back pressure of each first-stage piston diameter is not applied is opened to the atmospheric pressure, it is necessary to make the intake and exhaust port 104 large within the allowable range. This is because, if the intake and exhaust port 104 is small, resistance is generated, and metallic sound is produced at the time of air intake and exhaust.

### EFFECT OF THE INVENTION

As described above, a drive device using filled air according to the present invention makes filled air pressure move and circulate, and thereby obtains strong torque and smooth torque proportional to the fill pressure, and the use of air pressure which is natural energy makes it effective in maintaining environmental health. Supply is possible at anytime wherever the air exists, and it is harmless and does not use fuel such as gasoline. Thus, the effect of self-supporting economy is produced.

Since the present invention makes it possible to select an up-and-down movement by air pressure as a rotation movement/side-to-side movement, it can be used, in particular, as a running engine of a bicycle, an automobile, a ship, and the like, or can be used in a generator or other various drive devices, and, due to the absence of a process of exhausting the filled fluid and the use of a small amount of electric power and air pressure as a power source, it is effective in saving energy and maintaining environmental health as a drive source of a pollution-free drive device.

## Claims

1. A drive device using charged air pressure in which two air pressure filled cylinders are communicated with each other, pistons of the cylinders are pressurized under a same pressure by compressed air fed to each cylinder, and the pistons of the cylinders are made to reciprocate alternately by providing an external input device feeding an external input so as to make piston rods of the pistons reciprocate alternately, the drive device obtaining torque by this reciprocating movement, wherein
the air pressure filled cylinders communicated with each other are first-stage cylinders, to which small diameter cylinders including a second-stage cylinder are connected to form multistage cylinders,
multistage pistons in the stage cylinders including the second-stage cylinder are formed integrally with the pistons of the first-stage cylinders,
the multistage pistons have formed therein filled air pressure fluid circulation paths communicated with the stage cylinders of the multistage cylinders and are provided with valves opening and closing the filled air pressure fluid circulation paths,
when the pistons are pushed downward by the external input, the valves are closed so as to make thrust sufficiently act on the pistons, pushing first-stage pistons of the first-stage cylinders downward and obtaining multistage thrust by using the thrust as an acting force of a second-stage piston and a third-stage piston.

2. A drive device using charged air pressure according to claim 1, wherein
piston hanger rods provided on left and right sides of a piston hanger swing lever are locked by the multistage pistons,
valve pressing rods for opening and closing the valves which open and close the filled air pressure fluid circulation paths of the multistage pistons, the filled air pressure fluid circulation paths being communicated with the stage cylinders, are inserted into the piston hanger rods in such a way that the valve pressing rods can move up and down, and
the valves of the left and right multistage cylinders are opened and closed alternately by pushing and pulling the valve pressing rods with valve switching swing levers which are made to swing by a drive motor.

3. A drive device using charged air pressure according to claim 1 or 2, wherein
valve switching swing levers are made to swing by a drive motor by rotating left and right valve switching gears with an intermediate gear rotated by the drive motor, and making bearings provided in the valve switching gears reciprocate in left and right long grooves of the valve switching swing levers.

4. A drive device using charged air pressure according to any one of claims 1 to 3, wherein
multistage piston chambers are filled with air pressure from a pressure vessel and, at a same time, each piston hangs from each piston hanger swing lever through a piston hanger rod and keeps balance.

5. A drive device using charged air pressure a compression pressure receiving/driving cylinder according to any one of claims 1 to 4, comprising a compression pressure receiving/driving cylinder which slides while being fitted in a final-stage cylinder as a transmission mechanism contributing to torque obtained by increasing and decreasing piston pressure of the final-stage cylinder.

6. A drive device using charged air pressure according to any one of claims 1 to 5, wherein
a compression pressure receiving/driving cylinder is provided with an atmospheric pressure air discharge pump piston which automatically makes up for leakage of fill pressure, and
a supply mechanism, which allows the first-stage cylinders to be replenished with pressure air via a pressure vessel and a pipe, is provided.

7. A drive device using charged air pressure according to any one of claims 1 to 6, wherein
a driving of a compression pressure receiving/driving cylinder is transmitted to a rotation of a gear by a link mechanism and is used to operate a generator.

8. A drive device using a circulation of filled air according to claim 1, wherein
a pair of pressure concentration cylinders is provided as output cylinders for a pair of air-filled multistage cylinders including pistons provided with intake and exhaust valves which are opened and closed with an up-and-down movement, the pair of pressure concentration cylinders being filled with air from the pair of air-filled multistage cylinders and returning the fill air to the air-filled cylinders, and
air supplied from the pair of air-filled multistage cylinders is made to flow together and is sent into the pressure concentration cylinders.

9. A drive device using a circulation of filled air according to claim 1 or 8, wherein
piston rods of a pair of air-filled cylinders are coupled to an input section such as a motor so as to perform relative movements with each other through a mediation of a gear mechanism producing a boosted force proportional to a main wheel diameter and a diameter of a pinion.

10. A drive device using a circulation of filled air according to claim 1 or 8, wherein
a gear mechanism producing a boosted force proportional to a main wheel diameter and a diameter of a pinion is constructed by fastening a pinion and a connecting lever to a piston rod to a radial gear having half a diameter of an internal gear fastened to a frame and making the radial gear mesh with the internal gear, fixing a main wheel to a pinion which meshes with the pinion, making an intermediate gear mesh with the main wheel, and making a pinion of a motor mesh with the intermediate gear.

11. A drive device using a circulation of filled air according to claim 1 or 8, wherein
pressure concentration cylinders are rack-equipped piston cylinders and are placed with the racks thereof meshed with output gears.

12. A drive device using a circulation of filled air according to claim 1 or 8, wherein
piston rods of a pair of air-filled cylinders are extended and double as piston rods of an air supply piston, and
atmospheric pressure air is accumulated in a pressure vessel by means of the air supply piston.
